## Europäisches Patentamt

## European Patent Office

## Office européen des brevets

(11) Numéro de publication: **0 179 686 B1**

# FASCICULE DE BREVET EUROPÉEN

(45) Date de publication du fascicule du brevet: 12.08.87

(51) Int. Cl.⁴: **B 60 T 13/14**

(21) Numéro de dépôt: **85401829.8**

(22) Date de dépôt: **19.09.85**

(54) Dispositif d'assistance hydraulique.

(30) Priorité: **26.09.84 FR 8414781**

(43) Date de publication de la demande:
**30.04.86 Bulletin 86/18**

(45) Mention de la délivrance du brevet:
**12.08.87 Bulletin 87/33**

(84) Etats contractants désignés:
**DE GB IT**

(56) Documents cité:
**DE-A-2 942 979**
**DE-A-3 028 894**
**GB-A-2 078 325**

(73) Titulaire: **BENDIX France, 126, rue de Stalingrad, F-93700 Drancy (FR)**

(72) Inventeur: **Kervagoret, Gilbert, 5, Impasse Nobleterre, F-95100 Argenteuil (FR)**

(74) Mandataire: **Timoney, Ian Charles Craig, Service Brevets Bendix 44, rue François 1er, F-75008 Paris (FR)**

LIBER, STOCKHOLM 1987

**Description**

La présente invention se rapporte aux dispositifs d'assistance hydraulique et plus particulièrement à un tel dispositif pour un circuit de freinage à fonctionnement mixte hydrodynamique (plus communément désigné sous l'appellation anglo-saxonne "full power") et hydrostatique.

On connaît de la demande de brevet français no 8 404 843 au nom de la Demanderesse (FR-A-2 560 133), correspondant au préambule de la revendication 1, un dispositif d'assistance hydraulique du type dit "full power" qui est susceptible de fonctionner comme un maître-cylindre conventionnel, en mode hydrostatique, en cas de défaillance du circuit haute pression. Ce dispositif comprend une coupelle annulaire qui sépare une première chambre de pression de maître-cylindre d'une deuxième chambre reliée aux freins du véhicule et susceptible d'être sélectivement reliée à la source haute pression. En cas de défaillance du circuit haute pression, lors d'une mise en oeuvre du dispositif, un piston, qui limite la première chambre, se déplace et comprime le fluide dans la première chambre, ce qui provoque un basculement de la coupelle et permet au fluide sous pression de passer en mode hydrostatique vers les freins.

Malgré ses avantages évidents, ce système présente cependant de légers inconvénients en ce que sa construction nécessite de nombreux clapets à bille pour conserver une course de pédale convenablement réduite et pour donner la sensation pédale requise. De plus, le déplacement brutal des divers composants lors d'une mise en oeuvre du dispositif peut être la source des bruits perceptibles.

L'invention a donc pour objet de proposer un dispositif d'assistance hydaulique du type dit "full power" susceptible de fonctionner comme un maître-cylindre conventionnel en cas de défaillance du circuit haute pression, qui soit de construction simple, de fiabilité accrue et plus silencieux.

Pour ce faire, l'invention concerne un dispositif d'assistance hydraulique, comprenant un boîtier pourvu d'un alésage dans lequel est monté coulissant un premier moyen de piston déplaçable sous l'effet de l'actionnement d'une pédale de freinage entre une première position permettant la communication d'une première chambre, reliée à un circuit de freinage, à un réservoir basse pression, et isolant cette chambre d'une source de fluide haute pression, et une deuxième position isolant la chambre du réservoir basse pression et la faisant communiquer avec la source haute pression, le dispositif comprenant de plus une deuxième chambre formée dans le boîtier, le moyen de communication entre la première chambre et le réservoir comprenant un deuxième alésage dans lequel est monté coulissant un piston de commande, comportant un alésage, le premier moyen de piston ayant un alésage dans lequel est monté coulissant un poussoir qui relie le premier moyen de piston au piston de commande, et un moyen de clapet susceptible de fermer le moyen de communication entre la première chambre et le réservoir sous l'effet du déplacement du premier moyen de piston, caractérisé en ce que le premier moyen de piston comprend un manchon dans lequel est monté coulissant un piston intérieur, le manchon et le piston intérieur étant couplés à la pédale de façon qu'un actionnement de la pédale provoque un déplacement initial du piston intérieur avant que le manchon ne se déplace.

D'autres caractéristiques et avantages de la présente invention ressortiront de la description suivante d'un mode de réalisation donné à titre illustratif, mais non limitatif, faite en relation avec les dessins annexés, sur lesquels:

La figure 1 est une vue en coupe longitudinale d'un dispositif d'assistance hydraulique selon l'invention; et

La figure 2 est une vue partielle à grande échelle du dispositif de la figure 1.

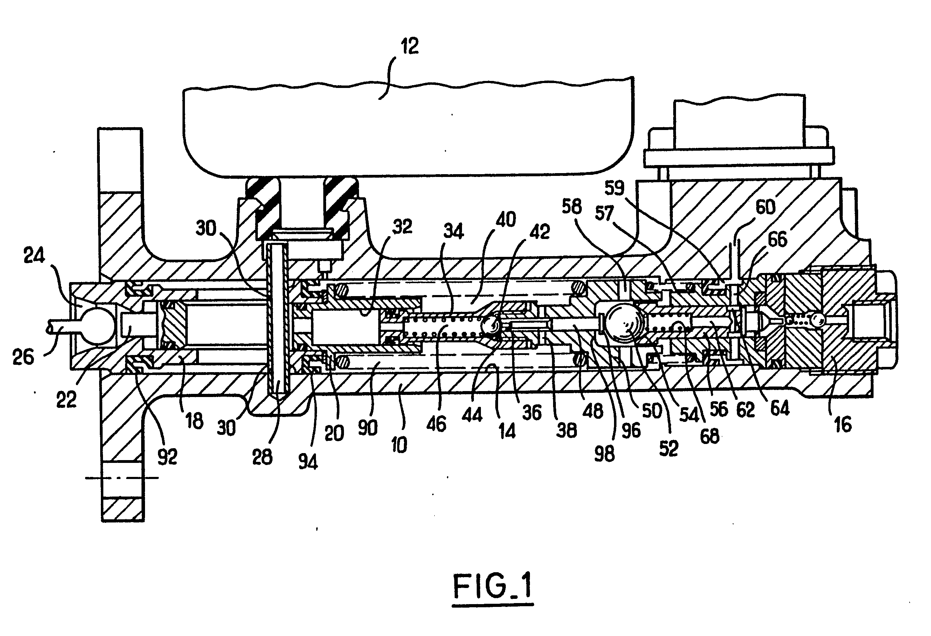

Comme représenté sur la figure 1 le dispositif d'assistance hydraulique dans l'exemple illustré un maître-cylindre, comprend un boîtier 10 sur lequel est monté un réservoir basse pression 12 de fluide hydraulique. Le boîtier 10 comprend un alésage principal 14 fermé à une extrémité par un élément de fermeture 16. Dans l'alésage 14 est monté coulissant un piston 18 en forme de manchon dans lequel est monté coulissant un piston intérieur 20. Le piston intérieur 20 comporte une tige de poussée 22 qui s'étend dans une ouverture 24 du piston 18 ayant une forme généralement cônique. Les deux pistons 18, 20 sont susceptibles d'être actionnés par un poussoir 26 relié à une pédale de freinage (non représentée). La forme de l'ouverture 24 permet, lors d'une mise en oeuvre du dispositif, un déplacement initial du piston intérieur 20 avant que la tête arrondie du poussoir 26 ne vienne en appui contre la surface cônique de l'ouverture 24 du piston 18.

Le piston 18 est retenu en butée arrière par une goupille creuse 28 ayant deux orifices 30 en communication hydraulique avec le réservoir 12. Le piston intérieur 20 comprend un alésage 32 dans lequel est monté coulissant un poussoir 34. Dans le poussoir 34 sont formés un perçage longitudinal étagé 36 et une ouverture transversale 38 qui forment ensemble un conduit dans l'alésage 32 et une chambre de pression (la "deuxième chambre" dans les revendications) 40. Un clapet à bille 42 est prévu dans le perçage 36 et est plaqué, dans la position de repos du dispositif, contre un siège 44 par un ressort 46. L'ouverture du clapet 42 est commandée par une aiguille 48 montée coulissante dans le perçage du poussoir 34.

Le poussoir 34 comprend une partie d'extrémité qui est élargie en forme de logement 50 dans lequel est retenue une bille 52 coopérant avec un siège cônique 54 sur un piston de commande 56 pour former clapet. Le piston de commande est monté coulissant dans une fourrure 57 montée fixe dans l'alésage 14 du boîtier 10 et définit avec ce dernier une deuxième chambre 59 (la "première chambre" dans les revendications).

Le logement 50 est percé d'une ouverture 58 qui, lorsque le clapet à bille 52 est ouvert, relie la chambre 40 aux freins du véhicule 60 par l'intermédiaire d'un perçage et d'une ouverture 64 dans le piston de commande 56, et d'une ouverture 66 dans la fourrure 57.

Le clapet à bille 52 est normalement sollicité vers sa position ouverte par un ressort 68.

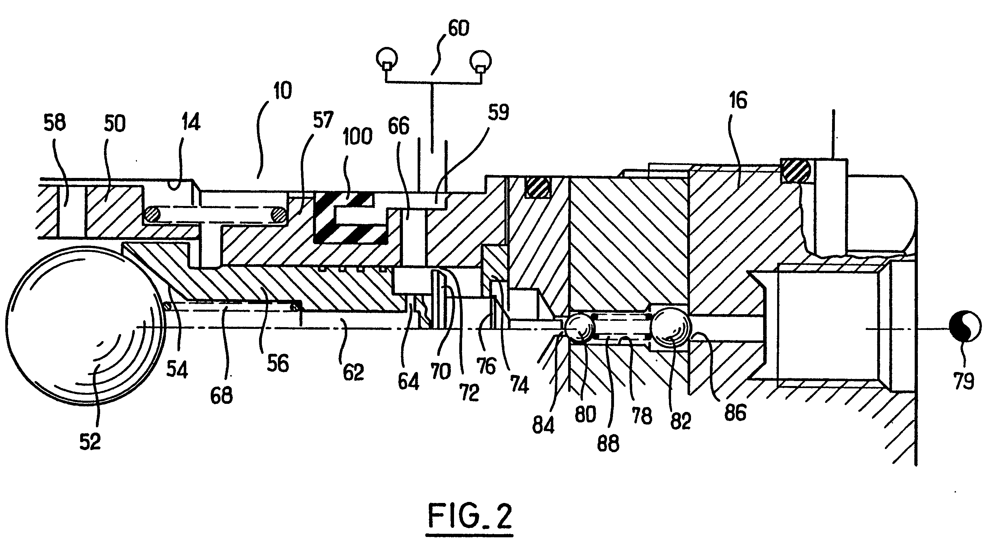

Comme représenté sur la figure 2, le piston de commande 56 comprend une collerette profilée 70 qui définit avec la fourrure 57 une restriction 72 dont la fonction sera explicitée ci-dessous. Sur la fourrure 57 est monté un élément annulaire 74 qui coopère avec un épaulement 76 sur le piston de commande 56 pour limiter le recul de ce dernier dans la position de repos représentée sur les figures. L'élément de fermeture 16 comporte un alésage 78, relié à une source de fluide sous pression 79, et dans lequel sont montés deux clapets à bille 80, 82 plaqués contre leurs sièges respectifs 84, 86 par un ressort 88.

Lors d'une mise en oeuvre du dispositif, le poussoir 26 se déplace vers la droite (en regardant les figures) et vient en appui contre la tige de poussée 22 du piston intérieur 20 provoquant le déplacement de ce dernier ainsi que, par l'intermédiaire d'un ressort 90 qui prend appui contre le piston intérieur 20 et le logement 50, le déplacement du logement 50 et du poussoir 34, avec le résultat qu'une tête d'extrémité 96 de l'aiguille 48 vient en appui contre la surface intérieure 98 du logement 50, le déplacement de l'aiguille ouvrant le clapet à bille 42, et la fermeture du clapet à bille 52 puis l'ouverture du clapet 80, ceci avant le contact du poussoir 26 avec le piston 18. Ensuite le poussoir 26 prend appui contre la surface cônique de l'ouverture 24 et provoque le déplacement du piston 18. Ce déplacement en deux temps des deux pistons a pour résultat que l'hystérésis due aux coupelles 92, 94 n'intervient pas dans la première phase de distribution.

Si le déplacement du poussoir 26 continue, les deux pistons 18 et 20 se déplacent ensemble vers la droite. Ensuite le déplacement de l'ensemble du logement 50 et de la bille 52 entraîne le déplacement vers la droite du piston de commande 56 qui ouvre le clapet à bille 80 permettant au fluide sous pression de passer de la source 79 par les clapets à bille 80 et 82, la restriction 72 et l'ouverture 60 vers les freins 66 du véhicule, une coupelle annulaire 100 et le clapet à bille 52 isolant la chambre 59 de la chambre 40. La restriction 72 a pour effet d'amortir la vitesse de montée en pression du circuit de freinage et le déplacement soudain des composants en réduisant ainsi les risques de bruits d'opération du dispositif.

Lors d'un défreinage il y a relâchement de l'effort sur le ressort 90 et l'ensemble poussoir 34/clapet à bille 52/piston de commande 32 se déplace vers la gauche et le clapet à bille 80 se referme. Dès que la tare du ressort 90 devient inférieure à l'action de la pression dans l'alésage 68 qui agit sur la bille 52, cette dernière s'ouvre avec une réduction correspondante de la pression de freinage. Ainsi la pression dans la chambre 59 décroît avec l'effort du ressort 90. Durant la phase de relâchement, le clapet à bille 42 reste ouvert pour permettre le passage de fluide en provenance des freins vers le réservoir basse pression 12.

En cas de défaillance du circuit haute pression le clapet à bille 82 reste fermé, isolant la chambre 59 du circuit haute pression. Le clapet à bille 42 se referme sous l'effet du ressort 46, le logement 50 vient en butée sur la fourrure 57, le piston 56 est repoussé vers la droite (sur la figure) par l'action du ressort 68 et le dispositif se transforme en maître-cylindre classique. La chambre 40 devient une chambre de pression hydrostatique dans laquelle est créée une pression de travail qui dépend de la force appliquée sur les pistons 18 et 20, de la raideur du ressort 90 et de l'absorption des freins. Durant cette phase le clapet à bille 52 reste ouvert du fait que l'effort du ressort 88 est inférieur à celui du ressort 68. Le fait que le clapet à bille 52 reste ouvert permet, en variante, le remplacement de la coupelle annulaire 100 par un simple joint torique, l'alimentation des freins en cas de défaillance du circuit haute pression se faisant par le clapet 52. Comme dans le dispositif de la demande 8 404 843 (FR-A-2 560 133) susmentionnée, l'alimentation des freins se fait par dessus la coupelle annulaire 100. Le défreinage, en cas de défaillance, se fait par le clapet à bille 52, la chambre 40 et le clapet à bille 42. Le clapet à bille 42 est taré d'une valeur suffisamment élevée pour que son ouverture ne soit pas préjudiciable au freinage de secours.

**Revendications**

1. Dispositif d'assistance hydraulique, comprenant un boîtier (10) pourvu d'un alésage (14) dans lequel est monté coulissant un premier moyen de piston déplaçable sous l'effet de l'actionnement d'une pédale de freinage entre une première position permettant la communication d'une première chambre (59) reliée à un circuit de freinage (60) à un réservoir basse pression (12), et isolant cette chambre (59) d'une source de fluide haute pression (79), et une deuxième position isolant la chambre (59) du réservoir basse pression (12) et la faisant communiquer avec la source haute pression (79), le dispositif comprenant de plus une deuxième chambre (40) formée dans le boîtier (10), le moyen de communication entre la première chambre (59) et le réservoir (12) comprenant un deuxième alésage dans lequel est monté coulissant un piston de commande (56), comportant un alésage (62), le premier moyen de piston ayant un alésage (32) dans lequel est monté coulissant un poussoir (34) qui relie le premier moyen de piston au piston de commande (56), et un moyen de clapet (52) susceptible de fermer le moyen de communication entre la première chambre (59) et le réservoir (12) sous l'effet du déplacement du premier moyen de piston, caractérisé en ce que le premier moyen de piston comprend un manchon (18) dans lequel est monté coulissant un piston intérieur (20), le manchon (18) et le piston intérieur (20) étant couplés à la pédale de façon qu'un actionnement de la pédale provoque un déplacement initial du piston intérieur (20) avant que le manchon (18) ne se déplace.

2. Dispositif selon la revendication 1, caractérisé en ce que le premier moyen de piston (18, 20) est couplé à la pédale par l'intermédiaire d'un poussoir (26), le manchon (18) comportant une ouverture (24) dans laquelle est reçue une extrémité du poussoir (26), et en ce que le piston intérieur (20) s'étend dans l'ouverture (24).

3. Dispositif selon la revendication 2, caractérisé en ce que l'ouverture (24) comporte une surface cônique, le piston intérieur (20) s'étendant à travers un orifice dans la surface cônique, l'extrémité du poussoir (26) ayant une forme généralement sphérique de sorte que l'extrémité sphérique du poussoir ne vienne en butée contre la surface cônique qu'après avoir déplacé le piston intérieur (20).

4. Dispositif selon la revendication 3 caractérisé en ce que le piston intérieur (20) comporte l'alésage (32) dans lequel est monté le poussoir (34).

5. Dispositif selon l'une des revendications 1 à 4, caractérisé en ce qu'il comprend en outre une restriction (72) dans un passage qui fait communiquer la source haute pression (79) avec le circuit de freinage (60), la restriction (72) amortissant la vitesse de montée en pression du circuit de freinage lors d'une mise en oeuvre du dispositif.

6. Dispositif selon la revendication 5, caractérisé en ce que la restriction (72) est formée par une collerette (70) à l'extrémité du piston de commande (56) et coopérant avec une paroi interne du deuxième alésage.

**Patentansprüche**

1. Hydraulische Servovorrichtung mit einem Gehäuse (10), das mit einer Bohrung (14) versehen ist, in welcher eine erste Kolbenanordnung gleitend gelagert und durch Betätigung eines Bremspedals zwischen einer ersten und einer zweiten Stellung verschiebbar ist, wobei die erste Stellung die Verbindung zwischen einer an einem Bremskreis (60) angeschlossenen ersten Kammer (59) und einem Niederdruckspeicher (12) ermöglicht und diese Kammer (59) von einer Hochdruckquelle (79) trennt, und die zweite Stellung die Kammer (59) von dem Niederdruckspeicher (12) trennt und sie mit der Hochdruckquelle (79) verbindet, wobei die Vorrichtung ferner eine zweite Kammer (40) aufweist, die in dem Gehäuse (10) gebildet ist, wobei die Verbindung zwischen der ersten Kammer (59) und dem Reservoir (12) eine zweite Bohrung aufweist, in der ein Betätigungskolben (56) gleitend gelagert ist, welcher eine Bohrung (62) aufweist, die erste Kolbenanordnung eine Bohrung (32) aufweist, in der ein Stößel (34) gleitend gelagert ist, welcher die erste Koblenanordnung mit dem Betätigungskolben (56) verbindet, und einem Ventilteil (52), das die Verbindung zwischen der ersten Kammer (59) und dem Speicher (12) durch eine Verschiebung der ersten Kolbenanordnung zu schließen vermag, dadurch gekennzeichnet, daß die erste Kolbenanordnung eine Hülse (18) aufweist, in der ein Innenkolben (20) gleitend gelagert ist, wobei die Hülse (18) und der Innenkolben (20) mit dem Pedal so gekoppelt sind, daß eine Betätigung des Pedals eine anfängliche Verschiebung des Innenkolbens (20) hervorruft, ehe sich die Hülse (18) verschiebt.

2. Vorrichtung nach Anspruch 1, dadurch gekennzeichnet, daß die erste Kolbenanordnung (18, 20) mit dem Pedal über einen Stößel (26) gekoppelt ist, wobei die Hülse (18) eine Öffnung (24) aufweist, in der ein Ende des Stößels (26) aufgenommen ist, und daß der Innenkolben (20) sich in die Öffnung (24) hineinerstreckt.

3. Vorrichtung nach Anspruch 2, dadurch gekennzeichnet, daß die Öffnung (24) eine konische Fläche aufweist, wobei der Innenkolben (20) sich durch einen Durchlaß in der konischen Fläche hindurcherstreckt, wobei das Ende des Stößels (26) eine ungefähr kugelförmige Gestalt besitzt, derart, daß das kugelförmige Ende des Stößels mit der konischen Fläche erst in Anlage gelangt, nachdem er den Innenkolben (20) verschoben hat.

4. Vorrichtung nach Anspruch 3, dadurch gekennzeichnet, daß der Innenkolben (20) die Bohrung (32) aufweist, in der der Stößel (34) gelagert ist.

5. Vorrichtung nach einem der Ansprüche 1-4, dadurch gekennzeichnet, daß sie ferner eine Drosselstelle (72) in einem Kanal aufweist, der die Hochdruckquelle (79) mit dem Bremskreis (60) verbindet, wobei die Drosselstelle (72) die Anstiegsgeschwindigkeit des Drucks im Bremskreis dämpft, wenn die Vorrichtung in Betrieb genommen wird.

6. Vorrichtung nach Anspruch 5, dadurch gekennzeichnet, daß die Drosselstelle (72) von einer Ringscheibe (70) gebildet wird, die am Ende des Betätigungskolbens (56) vorgesehen ist und mit einer Innenwand der zweiten Bohrung zusammenwirkt.

## Claims

1. Hydraulic servo device comprising a casing (10) provided with a bore (14) slidingly receiving a first piston means displaceable by actuation of a brake pedal between a first position providing a communication of a first chamber (59) connected to a brake circuit (60) to a low-pressure reservoir (12) and isolating said chamber (59) from a high-pressure fluid source (79), and a second position isolating the chamber (59) from the low-pressure reservoir (12) and having it communicate with the high-pressure source (79), the device further comprising a first chamber (40) formed in the casing (10), the means for communication between the first chamber (59) and the reservoir (12) comprising a second bore slidingly receiving a control piston (56) comprising a bore (62), the first piston means having a bore (32) slidingly receiving a push member (34) which connects the first piston means to the control piston (56), and a valve means (52) adapted to close the means of communication between the first chamber (59) and the reservoir (12) under the action of a displacement of the first piston means, characterized in that the first piston means comprises a sleeve (18) slidingly receiving an internal piston (20), the sleeve (18) and the internal piston (20) being coupled to the pedal such that actuation of the pedal results in an initial displacement of the internal piston (20) before the sleeve (18) is displaced.

2. Device according to claim 1, characterized in that the first piston means (18,20) is coupled to the pedal via a push member (26), the sleeve (18) comprising an opening (24) receiving an end of the push member (26), and in that the internal piston (20) extends into the opening (24).

3. Device according to claim 2, characterized in that the opening (24) comprises a conical surface, the internal piston (20) extending across an orifice in the conical surface, the end of the push member (26) having a substantially spherical form so that the spherical end of the push member comes into engagement with the conical surface only after having displaced the internal piston (20).

4. Device according to claim 3, characterized in that the internal piston (20) comprises the bore (32) receiving the push member (34).

5. Device according to any of claims 1 to 4, characterized in that it further comprises a restriction (72) in a passage which communicates the high-pressure source (79) with the brake circuit (60), the restriction (72) dampening the speed of increase of brake circuit pressure when the device is operated.

6. Device according to claim 5, characterized in that the restriction (72) is formed by an annular plate (70) provided at the end of the control piston (56) and cooperating with an internal wall of the second bore.

FIG_1

FIG. 2

0 179 686